# DEMANDE DE BREVET EUROPEEN

(11) **EP 3 222 432 A2**
(43) Date de publication de la demande: **27.09.2017**
(21) Numéro de dépôt: 17164728.2
(22) Date de dépôt: 12.05.2014
(51) Int. Cl.: B41J 3/407

(54) **SYSTEME ET PROCEDE D'IMPRESSION POUR APPLIQUER UN DESSIN SUR AU MOINS UNE SURFACE D'ONGLE**

(30) Priorité: 07.08.2013 FR 1357853
(62) Demande divisionnaire de: 14741930.3
(71) Demandeur: Nailae Technology Limited, Mahé (SC)
(72) Inventeur: LEGALLAIS, Alexandre, 33200 Bordeaux (FR)
(74) Mandataire: Cabinet Chaillot

(57) **Abrégé**

L'invention concerne un système comprenant un appareil (1) pour appliquer un dessin sur une surface d'ongle (SO), comportant :
- un serveur (5) intégrant une base de données (50),
- des terminaux (6a, 6b, 6c, 6d) générant un dessin sous forme de données numériques, chaque terminal communiquant avec le serveur (5), de sorte que lesdites données générées soient transmises audit serveur,
- le serveur (5) stocke de manière hiérarchisée les données reçues, lesdites données étant stockées dans des zones mémoires (5a, 5b, 5c, 5d), lesquelles zones mémoires sont accessibles par mot de passe et/ou identifiant,
- une tablette tactile (4) connectée à l'appareil, laquelle tablette comporte un moyen pour communiquer avec le serveur (5) et accéder à une des zones mémoires (5a, 5b, 5c, 5d) et télécharger les données stockées, lesquelles données téléchargées correspondent au dessin à appliquer sur la surface d'ongle (SO).

## Description

### Domaine technique de l'invention.

L'invention concerne un système et un procédé d'impression pour appliquer un dessin sur au moins une surface d'ongle.

L'invention concerne le domaine technique de la manucure, et plus particulièrement des appareils de manucure, du type imprimante, permettant d'appliquer sur des ongles des dessins complexes, personnalisés, détaillés, multicolores.

### État de la technique.

On connait par les documents brevets US 6.067.996 (WEBER), US 2013/019799 (BITHO) ou encore EP 1.204.340 (PEARL TECHNOLOGY) décrivent des appareils permettant d'appliquer un dessin sur au moins une surface d'ongle.

Ce type d'appareil comporte un guide permettant de positionner au moins une surface d'ongle au niveau d'une tête d'impression généralement montée sur rail et apte à être déplacée. Un dispositif optique de type caméra permet d'acquérir une image de la surface d'ongle. Lorsque l'utilisateur a sélectionné un dessin, une unité de contrôle pilote le déplacement de la tête d'impression en fonction de l'image de la surface d'ongle acquise et en fonction dudit dessin, de façon à ce que ladite tête applique ledit dessin sur la surface d'ongle.

Ce type d'appareil est globalement satisfaisant, notamment parce qu'il permet d'appliquer sur la surface de l'ongle, un dessin de manière très précise. L'utilisateur peut donc parer ses ongles de motifs originaux, multiformes et multicolores, qu'il n'est pas envisageable d'obtenir manuellement. Toutefois, le nombre de dessins mis à la disposition de l'utilisateur est généralement restreint, car faisant partie d'une base de données (ou « bibliothèque») dont le contenu est limité et contrôlé.

Le but de l'invention est de remédier à cet état des choses. En particulier, un objectif de l'invention est d'augmenter rapidement et simplement le nombre de dessins susceptibles d'être mis à la disposition des utilisateurs.

### Divulgation de l'invention.

La solution proposée par l'invention est un système d'impression comprenant au moins un appareil pour appliquer un dessin sur au moins une surface d'ongle, lequel appareil comporte :
- des moyens pour positionner au moins une surface d'ongle,
- un dispositif optique pour acquérir une image de la surface d'ongle,
- une tête d'impression,
- des moyens pour déplacer la tête d'impression afin d'appliquer un dessin sur la surface d'ongle,
- une unité de contrôle intégrant :
   ∘ un moyen pour communiquer avec le dispositif optique,
   ∘ une application informatique comprenant des instructions pour commander les moyens de déplacement en fonction de l'image de la surface d'ongle acquise et en fonction du dessin, de façon à diriger la tête d'impression afin qu'elle applique ledit dessin sur la surface d'ongle.

Les caractéristiques remarquables de l'invention sont les suivantes :
- le système comporte:
   ∘ au moins un serveur distant de l'appareil, lequel serveur intègre au moins une base de données dans laquelle sont enregistrées des données numériques,
   ∘ une série de terminaux appartenant à une communauté d'utilisateurs, chaque dit terminal intégrant au moins un moyen pour générer un dessin sous forme de données numériques, chaque dit terminal comportant en outre un moyen pour communiquer, par l'intermédiaire d'un réseau internet, avec le serveur distant, de sorte que lesdites données générées soient transmises audit serveur distant,
- le serveur distant intègre une application informatique comprenant des instructions pour stocker de manière hiérarchisée les données numériques reçues, lesdites données étant stockées dans des zones mémoires de la base de données, lesquelles zones mémoires sont associées à chacun des utilisateurs de la communauté et sont accessibles par mot de passe et/ou identifiant,
- l'unité de contrôle se présente sous la forme d'une tablette tactile connectée de manière amovible sur l'appareil, laquelle tablette comporte un moyen pour communiquer, par l'intermédiaire d'un réseau internet, avec le serveur distant, de sorte que ladite tablette puisse accéder à au moins une des zones mémoires et télécharger les données numériques qui y sont stockées, lesquelles données téléchargées correspondent au dessin à appliquer sur la surface d'ongle.

Grâce à l'invention, la communauté d'utilisateurs peut personnaliser et enrichir de manière illimitée et en temps réel la base de données du serveur distant. Chaque utilisateur peut ensuite se connecter, via sa tablette tactile, au serveur distant et avoir accès à tout ou partie de dessins enregistrés dans cette base de données. Par rapport aux appareils précités de l'art antérieur, la base de données « dessins » est beaucoup plus importante.

D'autres caractéristiques avantageuses de l'invention sont listées ci-dessous, chacune de ces caractéristiques pouvant être considérée seule ou en combinaison avec les caractéristiques remarquables définies ci-dessus :
- La tablette tactile affiche avantageusement les données numériques contenues dans la zone mémoire du serveur distant, sous forme de dessins accessibles dans une bibliothèque numérique.
- La tablette tactile peut intégrer une application informatique comprenant des instructions pour : commander le dispositif optique pour acquérir, sous forme de données numériques, une image de la surface d'ongle sur laquelle est appliqué le dessin ; et transférer au serveur distant, les données numériques acquises.
- Le serveur distant intègre avantageusement une application informatique comprenant des instructions pour stocker les données numériques reçues, soit dans la zone mémoire associée à l'utilisateur de la tablette tactile connectée à l'appareil, soit dans chacune des zones mémoires, soit dans les zones mémoires d'utilisateurs préalablement sélectionnés de la communauté.
- L'appareil est préférentiellement associé à un identifiant unique, et à l'issue de l'application d'un dessin sur une surface d'ongle, la tablette tactile transmet au serveur distant une information intégrant cet identifiant unique, de sorte que ledit serveur distant puisse comptabiliser le nombre de dessins appliqués par ledit appareil.
- La tablette tactile est préférentiellement associée à un identifiant unique, et à l'issue de l'application d'un dessin sur une surface d'ongle, la tablette transmettant au serveur distant une information intégrant cet identifiant unique, de sorte que ledit serveur distant puisse comptabiliser le nombre de dessins téléchargés par ladite tablette et appliqués par l'appareil.
- Le serveur distant intègre préférentiellement une application informatique comprenant des instructions pour générer, à intervalle de temps régulier prédéterminé, une facture électronique prenant en compte le nombre de dessins comptabilisés sur cet intervalle ; le serveur distant comprend en outre un moyen pour transmettre automatiquement la facture électronique générée, à un organisme payeur.
- Le serveur distant peut être connecté à plusieurs appareils pour appliquer un dessin sur au moins une surface d'ongle.

Un autre aspect de l'invention concerne un procédé pour appliquer un dessin sur au moins une surface d'ongle, comprenant les étapes consistant à :
- positionner au moins une surface d'ongle au niveau d'une tête d'impression d'un appareil,
- acquérir une image de la surface d'ongle,
- déplacer la tête d'impression en fonction de l'image de la surface d'ongle acquise et en fonction du dessin, de façon à appliquer ledit dessin sur la surface d'ongle,
- générer plusieurs dessins sous forme de données numériques, lesdits dessins étant générés par une communauté d'utilisateurs,
- transmettre ces données à au moins un serveur distant de l'appareil et les stocker de manière hiérarchisée dans des zones mémoires associées à chacun des utilisateurs de la communauté et qui sont accessibles par mot de passe et/ou identifiant,
- connecter de manière amovible une tablette tactile sur l'appareil, laquelle tablette fait office d'unité de contrôle dudit appareil,
- accéder, depuis la tablette, à au moins une des zones mémoires du serveur distant et télécharger les données numériques qui y sont stockées, lesquelles données téléchargées correspondent au dessin à appliquer sur la surface d'ongle.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 illustre un système d'impression conforme à l'invention,
- la figure 2 illustre un exemple de bibliothèque numérique de dessins affichés sur l'écran d'une tablette tactile.

### Modes préférés de réalisation de l'invention.

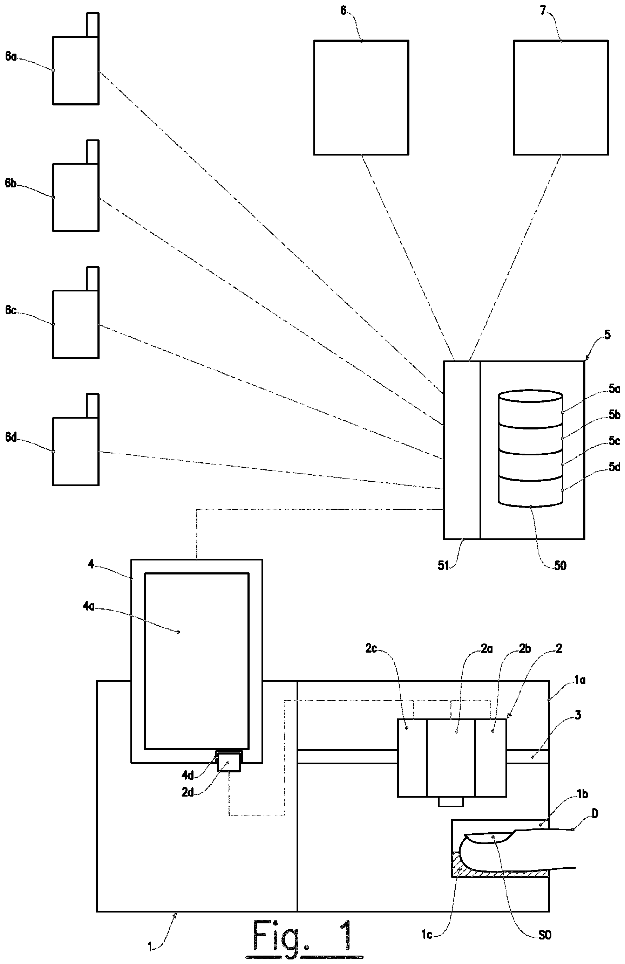

La figure 1 montre un appareil 1 pour appliquer un dessin sur au moins une surface d'ongle SO. Cet appareil 1 se présente par exemple sous la forme d'une imprimante pour ongle, du type décrit dans les documents brevets US 2013/019799 (BITHO) ou EP 1.204.340 (PEARL TECHNOLOGY) précités auxquels l'homme du métier peut se référer.

Plus particulièrement, l'appareil 1 comprend un boîtier 1a, de forme parallélépipédique, ovale, ronde ou autre, dont la face avant est pourvue d'une ouverture 1b pour le passage d'au moins un doigt D d'une main d'un utilisateur. L'ouverture 1b peut être dimensionnée pour permettre le passage d'un seul doigt, ou de plusieurs doigts et notamment de tous les doigts d'une main d'un utilisateur, et préférentiellement des deux mains (ou des pieds).

L'ouverture 1b débouche dans un logement situé à l'intérieur du boîtier 1a, et dans lequel sont positionnés le ou les doigts D. Ce logement est équipé de moyens 1c pour positionner au moins une surface d'ongle SO. Ces moyens 1c se présentent par exemple sous la forme d'un guide du type décrit dans le document brevet US 2013/019799 (BITHO) en référence aux figures 5A à 11 dudit document, ou sous la forme d'empreintes du type décrit dans le document brevet EP 1.204.340 (PEARL TECHNOLOGY) en référence aux figures 1A ou 4A dudit document. Les moyens de positionnement 1c sont configurés de manière à positionner et maintenir en position la surface d'ongle SO en direction d'un dispositif d'impression.

Sur l'exemple de la figure 1, le dispositif d'impression consiste en un chariot 2 monté sur rails 3. Le chariot 2 est équipé d'une tête d'impression 2a et éventuellement d'un dispositif optique 2b pour acquérir une image de la surface d'ongle SO.

La tête d'impression 2a utilise avantageusement un procédé à jet d'encre dans laquelle de l'encre est pulvérisée en gouttes fines et éjectée sur la surface d'ongle SO. Mais d'autres procédés d'impression peuvent être envisagés. La tête d'impression 2a est reliée à une cartouche d'encre (non représentée) et comprend par exemple une rangée de buses qui pulvérise une encre noire, une rangée de buses qui pulvérise une encre cyan, une rangée de buses qui pulvérise une encre magenta, et une rangée de buses qui pulvérise une encre jaune, etc. Les encres utilisées sont du type connu de l'homme du métier et adaptées pour être appliquées sur la surface d'un ongle.

Le dispositif optique 2b se présente par exemple sous la forme d'une cellule photo numérique ou d'une caméra CCD située à côté ou au dessus de la tête d'impression 2a et qui permet de scanner l'anatomie de la surface d'ongle SO avant, pendant ou après l'impression.

Les rails 3 sont agencés de sorte que le chariot 2 puisse se déplacer au moins dans un plan horizontal, vers la droite, vers la gauche, vers l'avant et vers l'arrière. On peut également prévoir des rails agencés de sorte que le chariot 2 se déplace dans un plan vertical, vers le haut et vers le bas. Un moteur 2c assure le déplacement du chariot 2 sur les rails 3. Dans une variante de réalisation non représentée, on peut envisager d'installer la tête d'impression 2a d'une part et le dispositif optique 2b d'autre part, chacun sur un chariot mobile motorisé. Dans une autre variante de réalisation, le dispositif optique 2b est fixe, seule la tête d'impression 2a étant mobile et associée au chariot 2.

Une tablette tactile 4 faisant office d'unité de contrôle, est connectée de manière amovible sur l'appareil 1. Par tablette tactile, on entend au sens de la présente invention tout terminal informatique portable en forme de tablette ayant pour principale interface un écran tactile 4a (ex : IPad® ou Samsung®), y compris les téléphones portables intelligents connus sous le terme anglais « Smartphones ». En pratique, la tablette 4 est pourvue d'une batterie rechargeable, d'une carte mère, d'un ou plusieurs processeurs et une zone mémoire dans laquelle sont enregistrées différentes applications informatiques dont les instructions assurent la mise en oeuvre des différentes fonctionnalités évoquées dans la présente description. Le système d'exploitation est du type connu de l'homme du métier (ex : Android®, BlackBerry OS®, iOS® ; Windows® ; etc).

La tablette tactile 4 est équipée d'une connectique 4d coopérant avec une connectique complémentaire 2d installée sur l'appareil 2, de sorte que des données puissent être échangées entre ladite tablette et les éléments dudit appareil. Il peut s'agir d'une connectique physique (ex : port USB ou port série ou lecteur de carte SD) ou d'une connectique sans fil (ex : Wifi, Bluetooth). Cette connectique autorise notamment la tablette 4 à communiquer avec le dispositif optique 2b et à générer des instructions à destination de la tête d'impression 2a et du moteur 2c. Plus particulièrement, lorsque la surface d'ongle SO est en position dans l'appareil 1, la tablette 4 commande le déplacement du chariot 2 afin que le dispositif optique 2b acquière une image de ladite surface d'ongle. Dès lors, la tablette 4 peut analyser l'anatomie de la surface d'ongle SO scannée et mettre à l'échelle le dessin préalablement choisi par l'utilisateur, afin de l'ajuster à ladite surface. La tablette 4 commande ensuite le déplacement de la tête d'impression 2a en fonction de l'image de la surface d'ongle SO acquise et en fonction du dessin choisi, de façon à appliquer ce dernier sur la surface d'ongle.

Sur la figure 1, un moins un serveur 5, distant de l'appareil 1, intègre au moins une base de données 50 dans laquelle sont susceptibles d'être enregistrées des données numériques. Plusieurs serveurs distants peuvent être utilisés dans le but d'optimiser l'archivage et la sécurisation des données. D'une manière bien connue, un serveur 5 se présente typiquement sous la forme d'un ordinateur équipé d'un ou plusieurs processeurs 51 et d'au moins une mémoire dans laquelle sont enregistrées différentes applications informatiques dont les instructions assurent la mise en oeuvre des fonctionnalités évoquées ci-après. Le serveur distant 5 peut être géré par un ou plusieurs opérateurs qui sont par exemple propriétaires des appareils 1. Le terme « serveur distant » doit également être entendu au sens de la présente invention comme un espace de stockage connu sous le terme anglais « Cloud ».

Une série de terminaux 6a, 6b, 6c, 6d mobiles ou fixes appartenant à une communauté d'utilisateurs (par exemple la communauté Facebook®), communiquent, par l'intermédiaire d'un réseau internet, avec le serveur distant 5. En pratique, les terminaux 6a, 6b, 6c, 6d et le serveur 5 sont chacun pourvu d'un émetteur/récepteur assurant ces communications via un modem, une connexion Ethernet, une connexion Wifi, ou autre. De cette façon, des données peuvent transiter depuis les terminaux 6a, 6b, 6c, 6d vers le serveur distant 5 et d'autres données peuvent transiter depuis ledit serveur vers lesdits terminaux. Les données transitant entre un terminal 6a, 6b, 6c, 6d et le serveur distant 5 sont préférentiellement échangées au travers d'une connexion internet sécurisée de type HTTP-S..

Les terminaux 6a, 6b, 6c, 6d peuvent être des tablettes tactiles, des téléphones mobiles, des appareils du type assistant digital personnel (PDA), des appareils du type BlackBerry®, des ordinateurs PC portables ou fixes, ou tous autres terminaux de communication aptes à se connecter dans un réseau de communication internet. Chaque terminal 6a, 6b, 6c, 6d intègre au moins un moyen pour générer un dessin sous forme de données numériques. Il s'agit par exemple d'un appareil photos intégré ou d'un logiciel de dessins de type PAINT®. Par « dessins », on entend au sens de la présente invention, tout motif susceptible d'être imprimé sur la surface d'ongle SO : photo, portait, dessin artistique, figure stylisée de visage type smiley, icône, logo, drapeau, texte, toute forme complexe, etc. Lorsque le dessin est généré, les données numériques associées sont transmises au serveur distant 5, automatiquement, ou en réponse à une action spécifique de l'utilisateur sur son terminal, par exemple un appui sur une touche dédiée. Les terminaux 6a, 6b, 6c, 6d sont préférentiellement associés à un identifiant unique permettant d'identifier l'utilisateur qui a généré le dessin. Cet identifiant se présente par exemple sous la forme d'une suite de caractères numériques ou alphanumériques.

Lorsque le serveur distant 5 reçoit ces données, il les stocke de manière hiérarchisée dans des zones mémoires 5a, 5b, 5c, 5d de la base de données 50. Ces zones mémoires 5a, 5b, 5c, 5d sont associées à chacun des utilisateurs de la communauté et sont accessibles par mot de passe et/ou identifiant. En pratique, chaque utilisateur de la communauté dispose de sa propre zone mémoire, laquelle zone est repérée par un identifiant unique qui correspond à celui permettant d'identifier l'utilisateur qui a généré le dessin. Lorsque les données numériques sont transmises par un terminal 6a, 6b, 6c, 6d, ces données sont avantageusement associées à l'identifiant dudit terminal et/ou de son utilisateur. En analysant l'ensemble des données reçues, le serveur 5 peut ainsi extraire l'identifiant et diriger les données numériques qui y sont associées vers la zone mémoire 5a, 5b, 5c, 5d affectée à l'utilisateur du terminal 6a, 6b, 6c, 6d qui a émis lesdites données. Chaque utilisateur peut ainsi se constituer en temps réel et de manière quasi-illimitée une bibliothèque de dessins susceptibles d'être appliqués sur une surface d'ongle.

La tablette 4 se connecte automatiquement, via une connexion Internet, au serveur 5 de manière à pouvoir accéder à au moins une des zones mémoires 5a, 5b, 5c, 5d et télécharger les données numériques qui y sont stockées, lesquels données téléchargées correspondent au dessin à appliquer sur la surface d'ongle SO. Pour ce faire, en réponse à la connexion de la tablette 4, le serveur distant 5 peut émettre une requête à destination de ladite tablette, sollicitant un mot de passe et/ou un identifiant. Ce dernier correspond à l'identifiant évoqué précédemment en rapport avec les terminaux 6a, 6b, 6c, 6d. L'utilisateur de la tablette 4 renseigne les informations demandées depuis ladite tablette et les transmet au serveur distant 5. Après vérification de ces informations, le serveur distant 5 autorise l'accès à la zone mémoire 5a, 5b, 5c, 5d qui correspond à l'identifiant renseigné. Cet identifiant peut éventuellement être contenu dans une carte NFC, auquel cas il suffit à l'utilisateur de présenter cette carte devant la tablette 4 pour autoriser cette identification. La tablette 4 a ainsi accès à tous les dessins stockés dans la zone mémoire autorisée. Chaque utilisateur (ex : « Julie ») de la communauté peut autoriser un ou plusieurs autres utilisateurs de ladite communauté (ex : « Marie » et « Bénédicte ») à accéder à sa propre zone mémoire. Le serveur distant 5 accorde dans ce cas un droit spécifique à « Marie » et « Bénédicte » pour qu'elles puissent accéder aux données stockées dans la zone mémoire de « Julie ». Lorsque « Marie » se connecte, via sa tablette 4, au serveur distant 5 et que l'accès à la base de données 5 lui est accordé, ladite tablette a non seulement accès aux données stockées dans la zone mémoire qui lui est dédiée (par exemple la zone mémoire 5a) mais également la zone mémoire de « Julie » (par exemple la zone mémoire 5b).

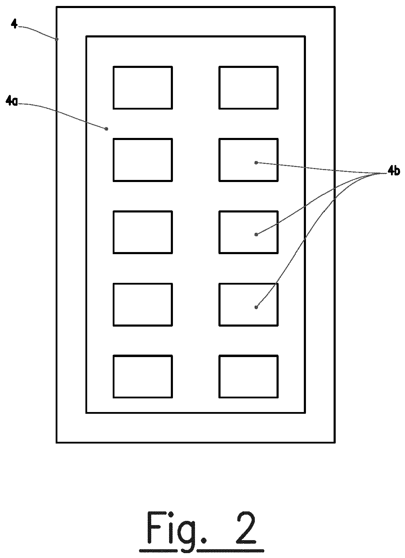

En se connectant au serveur distant 5, la tablette 4 voit apparaitre sur son écran 4a une bibliothèque numérique générée par ledit serveur. Cette bibliothèque affiche tous les dessins associés aux données numériques contenues dans la ou les zones mémoires 5a et/ou 5b et/ou 5c et/ou 5d dont l'accès est autorisé par le serveur distant 5. En se rapportant à la figure 2, les dessins sont affichés sous forme d'éléments sélectionnables 4b, par exemple des icônes sélectionnables par un appui sur l'écran 4a. La sélection d'un élément sélectionnable 4b génère une information de commande transmise, depuis la tablette 4, vers le serveur distant 5. Ce dernier transfère à la tablette 4 toutes les données numériques correspondant aux dessins sélectionnés, lesquelles données sont ainsi téléchargées dans ladite tablette. Ce téléchargement peut intervenir en réponse à la réception de l'information de commande par le serveur 5. Le téléchargement peut également intervenir antérieurement, par exemple dès l'étape d'identification, auquel cas toutes les données correspondant aux dessins répertoriés dans la bibliothèque sont préalablement téléchargées, mais seules celles correspondant aux dessins sélectionnés étant activées. Ces données téléchargées sont maintenant des données d'impressions prises en compte pour piloter le chariot 2 comme expliqué précédemment afin d'appliquer ce dessin sur la surface d'ongle SO.

A l'issue de l'application du dessin sélectionné sur la surface d'ongle SO, un utilisateur peut trouver avantageux de faire partager, aux autres membres de la communauté, une photo de ses ongles ainsi décorés. Pour reprendre l'exemple cité précédemment, « Marie » peut vouloir transmettre une photo de ses ongles à « Julie » et « Bénédicte » et même à l'ensemble de la communauté. Pour ce faire, la tablette 4 génère une instruction pour commander le dispositif optique 2b afin que ce dernier acquière, sous forme de données numériques, une image de la surface d'ongle SO sur laquelle est appliqué le dessin. La tablette 4 transfère ensuite au serveur distant 5, les données numériques acquises. Le serveur distant 5 stocke ces données soit dans la zone mémoire associée à l'utilisateur de la tablette tactile 4 connectée à l'appareil 1 (par exemple la zone mémoire 5a dédiée à « Marie »), soit dans chacune des zones mémoires 5a, 5b, 5c, 5d, soit dans les zones mémoires d'utilisateurs préalablement sélectionnés de la communauté (par exemple la zone mémoire 5a dédiée à « Marie » et la zone mémoire 5c dédiée à « Bénédicte »). Le ou les utilisateurs des zones mémoires dans lesquelles sont enregistrées les données numériques acquises par le dispositif optique 2b, peuvent alors télécharger ces données pour appliquer le dessin correspondant sur leurs ongles.

L'appareil 1 est avantageusement associé à un identifiant unique, typiquement une suite de caractères numériques ou alpha numériques. A l'issue de l'application d'un dessin sur une surface d'ongle SO, la tablette 4 génère une instruction pour transmettre au serveur distant 5 une information intégrant cet identifiant unique. Le serveur distant 5 est ainsi averti en temps réel que l'appareil 1 a réalisé l'application d'un dessin sur la surface d'ongle SO et peut comptabiliser le nombre de dessins appliqués par ledit appareil. Le serveur distant 5 génère alors, à intervalle de temps régulier prédéterminé (par exemple quotidiennement, mensuellement, trimestriellement, ou annuellement), une facture électronique prenant en compte le nombre de dessins comptabilisés sur cet intervalle. Dès lors qu'elle est générée, cette facture est ensuite transmise automatiquement à un organisme payeur 7 (figure 1) au travers d'une connexion internet sécurisée de type HTTP-S. L'organisme payeur 7 consiste par exemple en un institut de beauté dans lequel est installé l'appareil 1.

Dans une variante de réalisation, c'est l'utilisateur de la tablette 4 qui est facturé. A l'issue de l'application d'un dessin sur une surface d'ongle SO, la tablette 4 génère une instruction pour transmettre au serveur distant 5 une information intégrant un identifiant unique associé à ladite tablette. Le serveur distant 5 peut alors comptabiliser le nombre de dessins téléchargés par ladite tablette et appliqués par l'appareil 1. Comme décrit au paragraphe précédent, le serveur distant 5 génère une facture électronique prenant en compte le nombre de dessins comptabilisés sur un intervalle de temps régulier prédéterminé, et la transmet automatiquement à un organisme payeur 6, qui est dans ce cas, l'utilisateur de la tablette 4.

La tablette 4 peut transférer au serveur distant 5, d'autres informations relatives au fonctionnement de l'appareil 1 telles qu'une panne ou un niveau d'encre bas dans les cartouches. Le serveur distant 5 peut alors avertir un intervenant afin de remédier aux problèmes constatés et/ou assurer la maintenance. En outre, un organisme développeur 8 connecté au serveur distant 5, peut contrôler ledit serveur et le mettre à jour régulièrement.

L'agencement des différents éléments du système dans les modes de réalisation décrits ci-dessus ne doit pas être compris comme exigeant un tel agencement dans toutes les implémentations. En tout état de cause, on comprendra que diverses modifications peuvent être apportées au système et au procédé, sans s'écarter de l'esprit et de la portée de l'invention. En particulier, le serveur distant 5 peut être connecté à plusieurs appareils similaires à l'appareil 1 décrit précédemment. Egalement, les données numériques peuvent être stockées dans plusieurs serveurs distants. L'invention doit en outre être comprise comme couvrant l'application d'un dessin sur la surface d'un ongle artificiel destiné à être collé sur un ongle naturel.

## Revendications

1. Procédé exécuté par une tablette tactile connectée de manière amovible sur une imprimante afin de commander l'imprimante pour appliquer une image sur une surface d'ongle d'une personne, le procédé comprenant les étapes consistant à :
- afficher, sur un écran de la tablette tactile, une pluralité de dessins à appliquer sur la surface d'ongle de la personne ;
- recevoir, au niveau de la tablette tactile, une sélection de l'un des dessins à appliquer sur la surface d'ongle de la personne ;
- commander, par la tablette tactile et tandis qu'une connectique sur la tablette tactile est connectée à une connectique complémentaire sur l'imprimante, une caméra dans l'imprimante pour acquérir une image de la surface d'ongle de la personne ;
- mettre à l'échelle, par la tablette tactile et à partir de l'analyse de l'image de la surface d'ongle de la personne, le dessin sélectionné pour l'ajuster à la surface d'ongle de la personne ; et
- commander, par la tablette tactile et tandis que la connectique sur la tablette tactile est connectée à la connectique complémentaire sur l'imprimante, l'imprimante pour appliquer le dessin sélectionné sur la surface d'ongle de la personne tandis que la surface d'ongle de la personne est positionnée à l'intérieur d'une ouverture de l'imprimante.

2. Procédé selon la revendication 1, comprenant en outre les étapes consistant à :
- associer un identifiant unique à l'imprimante ; et
- transmettre, par la tablette tactile et à un serveur, l'identifiant unique et un nombre des dessins appliqués sur des surfaces d'ongle de la personne de telle sorte que le serveur peut comptabiliser et générer une facture sur la base du nombre des dessins appliqués sur les surfaces d'ongle de la personne.

3. Procédé selon la revendication 1, comprenant en outre les étapes consistant à :
- associer un identifiant unique à la tablette tactile ; et
- transmettre, par la tablette tactile et à un serveur, l'identifiant unique et un nombre des dessins appliqués sur des surfaces d'ongle de la personne de telle sorte que le serveur peut comptabiliser et générer une facture sur la base du nombre des dessins appliqués sur les surfaces d'ongle de la personne.

4. Procédé selon la revendication 1, comprenant en outre les étapes consistant à :
- transmettre, par la tablette tactile et à un serveur, un nombre de dessins appliqués sur des surfaces d'ongle de personnes pendant un intervalle de temps ; et
- générer, par le serveur, une facture électronique sur la base du nombre de dessins appliqués sur les surfaces d'ongle des personnes pendant l'intervalle de temps.

5. Procédé selon la revendication 1, comprenant en outre les étapes consistant à :
- stocker, dans un serveur et dans une zone mémoire associée à la personne, les dessins à appliquer sur la surface d'ongle de la personne ; et
- recevoir, au niveau de la tablette tactile et à partir du serveur, les dessins à appliquer sur la surface d'ongle de la personne.

6. Programme informatique comprenant des instructions qui, lorsqu'elles sont exécutées par une tablette tactile, amènent la tablette tactile à mettre en oeuvre un procédé qui commande une imprimante pour appliquer des images sur des surfaces d'ongle de personnes, le procédé comprenant les étapes consistant à :
- afficher, sur un écran de la tablette tactile, des dessins à appliquer sur les surfaces d'ongle des personnes ;
- recevoir, sur un écran de la tablette tactile, des dessins sélectionnés à appliquer sur des surfaces d'ongle d'une personne ;
- commander, par la tablette tactile, une caméra dans l'imprimante pour acquérir une image des surfaces d'ongle de la personne avant l'application des dessins sélectionnés sur les surfaces d'ongle de la personne et tandis que les surfaces d'ongle de la personne sont positionnées à l'intérieur d'une ouverture dans l'imprimante;
- commander, par la tablette tactile, l'imprimante pour appliquer les dessins sélectionnés sur les surfaces d'ongle de la personne tandis que les surfaces d'ongle de la personne sont positionnées à l'intérieur de l'ouverture dans l'imprimante ; et
- commander, par la tablette tactile, la caméra dans l'imprimante pour acquérir une image des surfaces d'ongle de la personne après l'application des dessins sélectionnés sur les surfaces d'ongle de la personne.

7. Programme informatique selon la revendication 6, dans lequel le procédé comprend en outre les étapes consistant à :
- analyser, par la tablette tactile, l'image des surfaces d'ongle de la personne avant l'application des dessins sélectionnés ; et
- mettre à l'échelle, par la tablette tactile et sur la base de l'analyse, les dessins sélectionnés pour les ajuster aux surfaces d'ongle de la personne.

8. Programme informatique selon la revendication 6, dans lequel le procédé comprend en outre l'étape consistant à :
- transmettre, par la tablette tactile et à un serveur, l'image des surfaces d'ongle de la personne après l'application des dessins sélectionnés sur les surfaces d'ongle de la personne de telle sorte que le serveur peut stocker, dans une zone mémoire associée à la personne, l'image des surfaces d'ongle de la personne après l'application des dessins sélectionnés.

9. Programme informatique selon la revendication 6, dans lequel le procédé comprend en outre l'étape consistant à :
- transmettre, à un serveur et par la tablette tactile après l'application des dessins sélectionnés sur les surfaces d'ongle de la personne, un nombre des dessins sélectionnés appliqués sur les surfaces d'ongle de la personne de telle sorte que le serveur peut comptabiliser et générer une facture sur la base du nombre de dessins appliqués par l'imprimante.

10. Programme informatique selon la revendication 6, dans lequel le procédé comprend en outre les étapes consistant à :
- télécharger, sur la tablette tactile et depuis le serveur, les dessins à appliquer sur les surfaces d'ongle des personnes ; et
- transmettre, à partir de la tablette tactile et au serveur, un identifiant unique de la tablette tactile de sorte que le serveur peut comptabiliser un nombre des dessins téléchargés par la tablette tactile et appliqués par l'imprimante.

11. Procédé exécuté par un téléphone intelligent qui commande une imprimante pour appliquer des images sur des surfaces d'ongle d'une personne, le procédé comprenant les étapes consistant à :
- afficher, sur un écran du téléphone intelligent, des dessins à appliquer sur les surfaces d'ongle de la personne ;
- commander, par le téléphone intelligent et par l'intermédiaire d'une communication sans fil entre le téléphone intelligent et l'imprimante, une caméra dans l'imprimante pour acquérir une image des surfaces d'ongle de la personne tandis que les surfaces d'ongle de la personne sont positionnées dans une ouverture de l'imprimante ;
- ajuster, par le téléphone intelligent et sur la base d'une analyse de l'image, les dessins pour les ajuster aux surfaces d'ongle de la personne ; et
- commander, par le téléphone intelligent et par l'intermédiaire de la communication sans fil entre le téléphone intelligent et l'imprimante, un déplacement d'une tête d'impression dans l'imprimante pour appliquer les dessins sur les surfaces d'ongle de la personne tandis que les surfaces d'ongle de la personne sont positionnées dans l'ouverture de l'imprimante.

12. Procédé selon la revendication 11, comprenant en outre l'étape consistant à :
- commander, par le téléphone intelligent et par l'intermédiaire de la communication sans fil entre le téléphone intelligent et l'imprimante, un déplacement d'un chariot qui comprend la caméra afin de déplacer la caméra en position pour acquérir l'image des surfaces d'ongle de la personne tandis que les surfaces d'ongle de la personne sont positionnées dans l'ouverture de l'imprimante.

13. Procédé selon la revendication 11, comprenant en outre les étapes consistant à :
- acquérir, à l'aide d'une caméra dans le téléphone intelligent, une image ;
- afficher, à l'aide de l'écran du téléphone intelligent, l'image comme l'un des dessins à appliquer sur les surfaces d'ongle de la personne ; et
- transmettre, par le téléphone intelligent et par l'intermédiaire de la communication sans fil entre le téléphone intelligent et l'imprimante, l'image à l'imprimante pour permettre à l'imprimante d'appliquer l'image sur l'une des surfaces d'ongle de la personne.

14. Procédé selon la revendication 11, comprenant en outre l'étape consistant à :
- transmettre, par le téléphone intelligent et à un serveur, un identifiant unique du téléphone intelligent et un nombre des dessins qui ont été appliqués sur les surfaces d'ongle de la personne de sorte que le serveur peut générer une facture électronique pour l'application des dessins sur les surfaces d'ongle de la personne.

15. Procédé selon la revendication 11, comprenant en outre l'étape consistant à :
- recevoir, sur le téléphone intelligent et depuis un serveur, un accès à une bibliothèque numérique de dessins pour des surfaces d'ongle qui appartiennent à la personne et de dessins pour des surfaces d'ongle qui appartiennent à une communauté d'utilisateurs ; et
- afficher, sur l'écran du téléphone intelligent, la bibliothèque numérique de dessins de sorte que la personne peut choisir un ou plusieurs des dessins qui appartiennent à la personne et à la communauté d'utilisateurs.
